# EUROPÄISCHE PATENTSCHRIFT

(11) **EP 2 682 040 B1**
(45) Veröffentlichungstag und Bekanntmachung des Hinweises auf die Patenterteilung: **24.08.2016**
(21) Anmeldenummer: 13401068.5
(22) Anmeldetag: 02.07.2013
(51) Int. Cl.: A47L 15/42, A47L 15/00

(54) **Verfahren zum Betreiben einer Geschirrspülmaschine**
Method for operating a dishwasher
Procédé de fonctionnement d'un lave-vaisselle

(30) Priorität: 03.07.2012 DE 102012105907
(43) Veröffentlichungstag der Anmeldung: 08.01.2014
(73) Patentinhaber: Miele & Cie. KG, 33332 Gütersloh (DE)
(72) Erfinder: Bertram, Andre, 33739 Bielefeld (DE); Dahms, Tobias, 30519 Hannover (DE)

(56) Entgegenhaltungen:
- EP-A1- 2 309 052
- EP-A2- 2 193 741
- EP-A2- 2 322 879
- EP-A2- 2 449 945
- KR-A- 20060 004 353

## Beschreibung

Die Erfindung betrifft ein Verfahren zum Beaufschlagen von innerhalb eines Spülraums einer Geschirrspülmaschine angeordneten Sprüheinrichtungen mit Spülflotte.

In der DE 102011000042.9 wird eine Geschirrspülmaschine beschrieben,. die über einen Spülbehälter verfügt, der einen Spülraum bereitstellt. Der Spülraum dient der Aufnahme von zu reinigendem Spülgut, bei dem es sich vorrangig um Geschirr oder Besteck handelt. Zur Beschickung des Spülgutes mit Spülflotte sind innerhalb des Spülraumes um eine gemeinsame Drehachse verdrehbar gelagerte Sprüharme angeordnet. In der Regel befinden sich drei solcher Sprüharme in Höhenrichtung der Geschirrspülmaschine übereinander. Zum Anschluss dieser Sprüharme an ein Wasser- und/oder Spülflottenzuführsystem sind im Spülraum entsprechend ausgebildete Ankopplungsstellen vorgesehen. Die Geschirrspülmaschine ist darüber hinaus mit einem Wärmepumpenkreislauf ausgestattet, um den Energieverbrauch insbesondere während der Heizphase der Maschine zu reduzieren, da der Heizvorgang den größten Anteil am Energieverbrauch der Geschirrspülmaschine verursacht. Der Wärmepumpenkreislauf weist insbesondere einen Verdampfer, einen Verdichter, einen Verflüssiger, eine Drosselstelle und einen diese Komponenten verbindenden Strömungskreislauf auf.

Die DE 102011000042.9 beschreibt insbesondere ein Verfahren zum Aufheizen von Spülflotte einer Geschirrspülmaschine, welches eine Luft- Wasser-Wärmepumpe verwendet. Dabei saugt die Geschirrspülmaschine während der Heizphase Raumluft (Zuluft) an, welche durch den Verdampfer der Wärmepumpe geleitet und abgekühlt wird. Die entzogene Wärmeenergie aus der Raumluft wird auf ein Arbeitsmedium (verdampftes Kältemittel) übertragen, welches anschließend mittels des Verdichters komprimiert und somit auf ein höheres Temperaturniveau gebracht wird. Schließlich kondensiert das heiße Kältemittel an dem Verflüssiger und heizt die Spülflotte auf.

Die EP 2449945 A2 offenbart ein Verfahren zum Beaufschlagen von innerhalb eines Spülraumes einer Geschirrspülmaschine angeordneten Sprüheinrichtungen mit Spülflotte, bei dem die Spülflotte ebenfalls mit einem Wärmepumpenkreislauf erwärmt wird, wobei dessen Verflüssiger zwischen einer Wasserweiche und einer der Sprüheinrichtungen angeordnet ist.

Obwohl das im Stand der Technik bekannte Verfahren und die entsprechende Geschirrspülmaschine gut funktioniert, ergibt sich dennoch Verbesserungsbedarf in Bezug auf die Energieeffizienz, Betriebssicherheit und Lebensdauer.

Es ist **Aufgabe** der Erfindung, ein Verfahren zum Beaufschlagen von innerhalb eines Spülraumes einer Geschirrspülmaschine angeordneten Sprüheinrichtungen mit Spülflotte zu schaffen, wobei sich Verbesserungen im Hinblick auf Energieeffizienz und Betriebssicherheit des Wärmepumpenkreislaufes ergeben.

Die Aufgabe wird gelöst durch ein Verfahren gemäß Anspruch 1. Weiterbildungen ergeben sich aus den abhängigen Ansprüchen und aus der Beschreibung.

Zur Lösung der Aufgabe wird mit der Erfindung insbesondere ein Verfahren vorgeschlagen, bei welchem die Spülflotte wahlweise in eine oder mehrere zu je mindestens eine Sprüheinrichtung führende Leitungen geleitet wird, wobei während einer ersten Heizphase Spülflotte in eine erste, zu einer ersten Sprüheinrichtung führende Leitung geleitet und mittels eines Verflüssigers eines Wärmepumpenkreislaufes erwärmt wird, wobei während einer zweiten Heizphase Spülflotte in mindestens eine zweite zu mindestens einer anderen Sprüheinrichtung führende Leitung geleitet wird, und wobei während einer weiteren ersten Heizphase Spülflotte wiederum in die erste zu der ersten Sprüheinrichtung führende Leitung geleitet wird, wobei der Verflüssiger während der drei Heizphasen, also während des Ablaufs der ersten, Heizphase, der zweiten Heizphase und der weiteren ersten Heizphase, kontinuierlich betrieben wird.

Zur Ausführung des beschriebenen Verfahrens dient eine Geschirrspülmaschine mit einem Spülraum, in welchem mindestens zwei Sprüheinrichtungen, insbesondere zwei drehbar gelagerte Sprüharme, zur Beschickung von Spülgut mit Spülflotte angeordnet sind, und mit einem Wärmepumpenkreislauf zur Aufheizung von Spülflotte, welcher einen Verflüssiger aufweist, wobei der Verflüssiger zwischen einer Wasserweiche und einer ersten Sprüheinrichtung angeordnet ist.

Als Sprüheinrichtung kann dabei insbesondere ein Sprüharm verwendet werden. Eine Ausgestaltung der Erfindung sieht insbesondere eine typische Anordnung von zwei oder vorzugsweise drei in unterschiedlichen Höhen im Spülraum angeordneten drehbaren Sprüharmen vor. Die erste Sprüheinrichtung, welche in der ersten Heizphase mit Spülflotte beaufschlagt wird, ist vorzugsweise oberhalb einer oder mehrerer, besonders bevorzugterweise aller weiterer Sprüheinrichtungen im Spülraum angeordnet. Insbesondere kann es sich bei der ersten Sprüheinrichtung somit um einen oberen Sprüharm, insbesondere einen oder den mittleren, vorzugsweise aber den obersten von drei oder mehr Sprüharmen handeln.

Zur Durchführung des Verfahrens verfügt die Geschirrspülmaschine vorteilhaft über eine Wasserweiche, beispielsweise einen Drehschieber, mittels welcher Spülflotte zeitlich nacheinander zu einer oder auch mehreren Sprüheinrichtungen geleitet werden kann. Diese abwechselnde Beaufschlagung der Sprüheinrichtungen mit Spülflotte hilft, Energie und Wasser zu sparen.

Die erfindungsgemäße Geschirrspülmaschine weist vorzugsweise eine Luft-Wasser-Wärmepumpe zum Aufheizen von Spülflotte auf mit einem Wärmepumpenkreislauf, welcher einen einen Verdampfer, einen Verdichter, einen Verflüssiger eine Drosselstelle und einen Srömungskreislauf umfasst. Dabei wird, beispielsweise mit einem Ventilator, während der Heizphase eines Spülprogramms Zuluft gefördert, beispielsweise angesaugt. Diese wird über den Verdampfer der Wärmepumpe geleitet und dadurch abgekühlt. Die entzogene Wärmeenergie aus der Zuluft wird auf ein Kältemittel übertragen und anschließend mittels des Verdichters komprimiert und somit auf ein höheres Temperaturniveau gebracht. Schließlich kondensiert das heiße Kältemittel an dem Verflüssiger und heizt dabei die Spülflotte auf. Die aus dem Verdampfer austretende kalte Abluft wird aus der Geschirrspülmaschine geleitet.

Die Geschirrspülmaschine, etwa eine Haushaltgeschirrspülmaschine, weist einen mit einer Beschickungstür in an sich bekannter Weise verschließbaren Spülraum auf. Während eines Spülprogramms wird das im Spülraum befindliche Spülgut zunächst gespült und anschließend getrocknet. Das Spülen umfasst typischerweise mehrere wasserführende Programmabschnitte, etwa die Programmabschnitte REINIGEN und KLARSPÜLEN. Im Spülbetrieb, also während wasserführender Programmabschnitte ist der Spülraum durch die Beschickungstür verschlossen.

Bei der, etwa vom Ventilator geförderten Zuluft, welche die Wärmequelle der Wärmepumpe darstellt, handelt es sich um Raumluft, also Luft aus dem Aufstellungsraum der Geschirrspülmaschine etwa der Küche, die insbesondere eine für derartige Räume übliche Umgebungstemperatur aufweist, also ca. 15 bis 25°C. Die Förderung der Zuluft bzw. Raumluft erfolgt während der Heizphase eines Spülprogramms, bei der Spülflotte aufgeheizt wird, insbesondere also während eines wasserführenden Programmabschnittes. Die Förderung der Zuluft erfolgt somit insbesondere bei geschlossener Beschickungstür.

Der Verflüssiger des Wärmepumpenkreislaufs ist in Strömungsrichtung der Spülflotte hinter der Wasserweiche, und zwar zwischen der Wasserweiche und der ersten Sprüheinrichtung angeordnet, insbesondere im Bereich einer von der Wasserweiche zu der ersten Sprüheinrichtung führenden ersten Leitung. Vorzugsweise umfasst der Verflüssiger zumindest Teilabschnitte dieser ersten Leitung.

Erfindungsgemäß wird die Spülflotte in der ersten Heizphase zu einer ersten Sprüheinrichtung, vorzugsweise einer oberen Sprüheinrichtung geleitet, wobei sie einen zwischen der Wasserweiche und der ersten Sprüheinrichtung angeordneten Verflüssiger durchläuft und mittels des im Verflüssiger vorhandenen erhitzten Kältemittels aufgewärmt wird. Nach einer vorgebbaren Zeitdauer, insbesondere sobald das im Spülraum der Geschirrspülmaschine angeordnete Spülgut ausreichend mittels der ersten Spüheinrichtung mit Spülflotte besprüht wurde, wird die zu der ersten Spüheinrichtung führende Leitung geschlossen. Hierzu kann eine Wasserweiche eingesetzt werden. Dadurch kann die von einer Umwälzpumpe geförderte Spülflotte nicht mehr in Richtung der ersten Sprüheinrichtung strömen. Der innerhalb der zu der ersten Sprüheinrichtung führenden ersten Leitung vorhandene Rest-Spülflottenteil bleibt nunmehr innerhalb dieser Leitung und damit auch innerhalb des dort angeordneten Verflüssigers stehen. Dadurch, dass der Verflüssiger während der anschließenden zweiten Heizphase weiterhin kontinuierlich in Betrieb bleibt, wird der in der ersten Leitung verbliebene Rest-Spülflottenteil weiterhin aufgeheizt, wodurch sich kältemittelseitig der Druck und die Temperatur und spülflottenseitig die Temperatur im Verflüssiger erhöhen. Dabei wird jedoch der Verfahrensablauf, insbesondere die für die einzelnen Verfahrensschritte vorgesehenen Teilzeiten, insbesondere die Länge der zweiten Heizphase, so ausgelegt, dass die Betriebsparameter innerhalb eines vorgegebenen normalen Bereiches bleiben. In der anschließenden weiteren ersten Heizphase wird dann wieder die erste Sprüheinrichtung mit Spülflotte beaufschlagt, wodurch der erhitzte Rest-Spülflottenanteil in den Spülraum gelangt und dort energetisch genutzt werden kann.

Während der Verflüssiger in der zweiten Heizphase weiterhin in Betrieb bleibt, obwohl keine Spülflotte durch ihn hindurchströmt, wird die Spülflotte nunmehr mindestens in eine zweite oder mehrere andere, zu mindestens einer weiteren Sprüheinrichtung führende Leitungen gefördert. Nach Abschließen der zweiten Heizphase werden die zweite oder mehrere andere zu der oder den weiteren Sprüheinrichtungen führenden Leitungen wieder geschlossen. Anschließend erfolgt erneut die Beschickung der ersten Sprüheinrichtung mit Spülflotte in einer weiteren ersten Heizphase. Dabei wird der Verflüssiger wieder durchströmt und die in Form eines Temperaturanstiegs innerhalb des im Verflüssiger verbliebenen Spülflottenteils gespeicherte Energie an die nunmehr wieder strömende Spülflotte abgegeben. So wird zur Aufheizung der Spülflotte auch die Wärmeenergie genutzt, die während der Zeit erzeugt wurde, in welcher der Verflüssiger nicht von Spülflotte durchströmt wurde. Sobald die gewünschte Spülprogrammtemperatur nun erreicht ist, wird der Wärmepumpenkreislauf abgeschaltet.

Durch die Erfindung wird somit ein sehr energieeffizientes Verfahren bereitgestellt. Dabei wird durch die an sich bekannte wechselnde Beaufschlagung der Sprüheinrichtungen eine Wasserersparnis erreicht, ohne die Betriebssicherheit und die Lebensdauer bzw. Zuverlässigkeit der Geschirrspülmaschine einzuschränken, da ein Abschalten des Wärmepumpenkreislaufs gemäß der Erfindung nicht erfolgt.

Erfindungsgemäß werden eine Vielzahl von abwechselnd aufeinander folgenden ersten und zweiten Heizphasen durchgeführt. Anders ausgedrückt wird ein Verfahren zum Betreiben einer Geschirrspülmaschine vorgeschlagen, bei welchem die Spülflotte wahlweise in eine oder mehrere zu je mindestens eine Sprüheinrichtung führende Leitungen geleitet wird, wobei ein Programmabschnitt eines Spülprogramms einen ersten Teilabschnitt umfasst, in dem eine Vielzahl von ersten und zweiten Heizphasen abwechselnd durchgeführt werden, wobei während einer ersten Heizphase Spülflotte in eine erste, zu einer ersten Sprüheinrichtung führende Leitung geleitet und mittels eines Verflüssigers eines Wärmepumpenkreislaufes erwärmt wird, wobei während einer zweiten Heizphase Spülflotte in mindestens eine zweite zu mindestens einer weiteren Sprüheinrichtung führende Leitung geleitet wird, und wobei der Verflüssiger während des ersten Teilabschnitts kontinuierlich betrieben wird.

Ein Spülprogramm umfasst typischerweise ein oder mehrere Programmabschnitte, insbesondere wasserführende Programmabschnitte, wie etwa Vorspülen, Reinigen, Zwischenspülen, Klarspülen.

Die abwechselende Durchführung von ersten und zweiten Heizphasen innerhalb des ersten Teilabschnitts des Programmabschnitt wird solange fortgesetzt, bis eine für den Programmabschnitt vorgesehene Programmtemperatur erreicht ist. Am Ende des ersten Teilabschnitts liegt somit eine vorgegebene oder vorgebbare Programmtemperatur, insbesondere Spülflottentemperatur im Spülraum, vor. Während des kompletten ersten Teilabschnitts ist der Wärmepumpenkreislauf somit in Betrieb. Ein Ausschalten des Wärempumpenkreislaufs unterbleibt vorteilhafterweise.

Nach Erreichen einer vorgesehenen, d.h. für den jeweiligen Programmabschnitt vorgegebenen oder vorgebbaren, Programmtemperatur, welche vorzugsweise eine Maximaltemperatur für den Programmabschnitt darstellt, wird der Wärmepumpenkreislauf abgeschaltet. Damit beginnt ein zweiter Teilabschnitt des Programmabschnitts, in dem der Wärmepumpenkreislauf ausgeschaltet bleibt und somit keine Erwärmung der Spülflotte durch den Wärmepumpenkreislauf mehr erfolgt. Den zweiten Teilabschnitt kann man auch als Haltezeit bezeichnen, in dem der Programmabschnitt mit hoher, aber durch Wärmeverluste nach und nach fallender Spülflottentemperatur weitergeführt wird.

Ein wasserführender Programmabschnitt umfasst somit einen ersten Teilabschnitt, in dem der Wärmepumpenkreislauf kontinuierlich betrieben wird, und einen zweiten Teilabschnitt, in dem der Wärmepumpenkreislauf durchgehend abgeschaltet ist.

Typischerweise umfasst ein erster Teilabschnitt ein vielfaches Wechseln der Wasserweichenstellung und damit viele abwechselnde erste und zweite Heizphasen, vorzugsweise jeweils 20 bis 100 erste und zweite Heizphasen.

Die Erfindung sieht weiterhin vor, dass eine bzw. die erste Heizphase ungefähr 80 % bis 90 % der zur Ausführung einer bzw. der ersten und zweiten Heizphase benötigten Gesamtzeit beansprucht. Eine bzw. die erste Heizphase ist somit vorzugsweise 5 bis 10 mal so lang wie eine bzw. die zweite Heizphase, bzw. im ersten Teilabschnitt ist eine durchschnittliche erste Heizphase vorzugsweise 5 bis 10 mal so lang wie eine durchschnittliche zweite Heizphase. Konkret bedeutet dies, dass die Beschickung der zu der ersten Sprüheinrichtung führenden Leitung einen zeitlichen Anteil von 80 % bis 90 % ausmacht. Damit ist die Zeitspanne, in welcher der Verflüssiger nicht von Spülflotte durchflossen wird, sondern lediglich einen stehenden Spülflottenteil aufheizt, mit 10% bis 20% besonders gering, so dass die Parameter Druck und Temperatur innerhalb des Verflüssigers nicht über die Höhe normaler Betriebsparameter ansteigen. Dadurch beträgt gleichzeitig die Zeitspanne, in welcher die andere Sprüheinrichtung oder die anderen Sprüheinrichtungen mit Spülflotte beaufschlagt werden, d.h. die Zeitspanne für die zweite Heizphase ebenfalls nur ungefähr 10 % bis 20 % der zur Ausführung aller Heizphasen benötigen Gesamtzeit. Insbesondere beträgt die aufsummierte Zeitdauer von ersten Heizphasen in dem ersten Teilabschnitt vorzugsweise 80 % bis 90 % der Gesamtdauer des ersten Teilabschnitts, während die aufsummierte Zeitdauer von zweiten Heizphasen in dem ersten Teilabschnitt vorzugsweise 10 % bis 20 % der Gesamtdauer des ersten Teilabschnitts beträgt.

Besonders vorteilhaft ist dabei in Bezug auf eine bzw. die zweite Heizphase, das heißt für das Leiten der Spülflotte in eine oder mehrere andere Leitungen, eine Zeitdauer oder eine durchschnittliche Zeitdauer von ca. 6 Sekunden bis 12 Sekunden vorgesehen. Diese Zeit ist ausreichend, um die übrigen Sprüheinrichtungen ausreichend mit Spülflotte zu versorgen, so dass das im Spülraum befindliche Spülgut weiterhin aus allen Richtungen mit Spülflotte besprüht werden kann und somit ausreichend gereinigt wird.

Besonders vorteilhaft sieht die Erfindung vor, dass der Wärmepumpenkreislauf nach der weiteren ersten Heizphase und/oder am Ende des ersten Teilabschnitts des Programmabschnitts abgeschaltet wird, und anschließend innerhalb eines zweiten Teilabschnitts des Programmabschnitts, welchen man auch als Ausgleichsphase bezeichnen kann, überwiegend die zu einem oder mehreren anderen Sprüheinrichtungen führenden Leitungen mit Spülflotte beaufschlagt werden. Dieser zweite Teilabschnitt, d.h. diese Ausgleichsphase nach Abschalten des Wärmepumpenkreislaufes dient dazu, zumindest überwiegend die oder den bisher benachteiligten Wasserweg mit Spülflotte zu beaufschlagen, um die gleichmäßige Reinigung des Spülguts sicherzustellen. Diese Beaufschlagung erfolgt dabei jeweils mit ausgeschaltetem Wärmepumpenkreislauf.

Die Länge des zweiten Teilabschnitts kann beispielsweise ungefähr der Gesamtlänge des ersten Teilabschnitts entsprechen. Über die somit gleich großen Zeitabschnitte von Heizphasen und Ausgleichsphase kann eine gleichmäßige Reinigung des Spülgutes sichergestellt werden.

Bei der erfindungsgemäßen Geschirrspülmaschine können Freiräume im Außengehäuse der Geschirrspülmaschine, insbesondere neben der Seitenwand des den Spülraum umgebenden Spülgehäuses, optimal genutzt werden. Der Verflüssiger wird also vorzugsweise nicht im Sockelbereich der Geschirrspülmaschine angeordnet, wo die Platzverhältnisse aufgrund der übrigen technischen Komponenten wie Sammeltopf, Umwälzpumpe etc. ohnehin schon sehr beengt sind. Durch das erfindungsgemäße Verfahren kann die Geschirrspülmaschine also beispielsweise so ausgebildet sein, dass der Verflüssiger in der Leitung zu einer ersten Sprüheinrichtung angeordnet ist, d.h. insbesondere nach der die Spülflotte umlenkenden Wasserweiche.

Die Geschirrspülmaschine weist typischerweise mehrere in unterschiedlichen Höhen im Spülraum angeordnete Sprüheinrichtungen auf. Vorzugsweise ist der Verflüssiger in der Leitung zu einer oberen Sprüheinrichtung, beispielsweise dem mittleren oder obersten von drei Sprüharmen, angeordnet.

Hierdurch steht eine große Wärmeübertragungsstrecke zur Verfügung, entlang der die Wärme vom Kältemittel auf die Spülflotte übertragen werden kann, insbesondere wenn der Verflüssiger in Strömungsrichtung der Spülflotte zwischen der Wasserweiche und der obersten Sprüheinrichtung, etwa dem obersten von drei Sprüharmen, angeordnet ist. Die erfindungsgemäße Geschirrspülmaschine erfordert somit insbesondere keine zusätzliche separate Wärmeübertragungsstrecke zur Energieübertragung vom Kältemittel auf die Spülflotte. Stattdessen wird zur Wärmeübertragung die Strecke verwendet, welche ohnehin besteht, um den Verflüssiger mit einem oberen oder bevorzugt dem obersten Sprüharm zu verbinden. Diese Verbindungsleitung ist lang genug, um die Übertragung der Wärmeenergie vom Kältemittel auf die Spülflotte sicherzustellen. Somit kann eine hohe Energieeffizienz der Geschirrspülmaschine erreicht werden, ohne gleichzeitig einen erhöhten Bauraum für zusätzliche Wärmeübertragungsleitungen bzw. Wärmeüberträger vorsehen zu müssen, welche wiederum das Volumen der Wasserwege vergrößern bzw. Totzonen innerhalb der Geschirrspülmaschine bedingen würden, was einen erhöhten Wasserbrauch zu Folge hätte.

Der Verflüssiger weist vorzugsweise zwei koaxial zueinander angeordnete Rohre auf, von welchen eines ein Kältemittelrohr und eines ein Spülflottenrohr ist, wobei das Spülflottenrohr innerhalb des Kältemittelrohres angeordnet ist. Das Spülflottenrohr stellt dabei einen Abschnitt der ersten zu der ersten Sprüheinrichtung führende Leitung dar.

Durch diese Ausgestaltung des Verflüssigers weist das Spülflotte führende Rohr einen Strömungsquerschnitt auf, welcher der Festsetzung von in der Spülflotte vorhandenen Feststoffen wirksam entgegenwirkt und gleichzeitig einen nur geringen Bauraum (mit geringem Wasserbedarf zur Befüllung) einnimmt.

Die Erfindung sieht gemäß einem Ausführungsbeispiel vor, dass der Verflüssiger sich zumindest annähernd vom Höhenniveau der Wasserweiche, welche vorzugsweise im Sockelbereich der Geschirrspülmaschine angeordnet ist, bis zu dem Höhenniveau der ersten Sprüheinrichtung, vorzugsweise einem oberen oder dem obersten Sprüharm, erstreckt.

Die Erfindung sieht gemäß einem Ausführungsbeispiel vor, dass der Verflüssiger, also insbesondere die beiden koaxial zueinander angeordneten Rohre, sich zumindest annähernd von der Wasserweiche, welche vorzugsweise im Sockelbereich der Geschirrspülmaschine angeordnet ist, bis zu der ersten Sprüheinrichtung, vorzugsweise einem oberen oder dem obersten Sprüharm, erstreckt.

Besonders vorteilhaft ist die Geschirrspülmaschine so ausgestaltet, dass der Verflüssiger bzw. die beiden koaxial zueinander angeordneten Rohre des Verflüssigers im Wesentlichen eine Länge aufweist bzw. aufweisen, die der Höhe des Spülraums vergleichbar ist.

Weitere Vorteile und Ausführungsbeispiele der Erfindung werden im Folgenden anhand der Figuren näher erläutert. Es zeigen:
- Figur 1: in einer perspektivischen Frontansicht eine Geschirrspülmaschine;
- Figur 2: die Geschirrspülmaschine gemäß Figur 1 in einer Seitenansicht;
- Figur 3: in einer schematischen Ansicht einen Wärmepumpenkreislauf;
- Figur 4: in einer schematischen Draufsicht eine Geschirrspülmaschine mit darin angeordnetem Wärmepumpenkreislauf gemäß Figur 3;
- Figur 5: eine Seitenansicht des Sockelbereiches der Geschirrspülmaschine gemäß Figur 4;
- Figur 6: eine schematische Schnittdarstellung einer Geschirrspülmaschine.
- Figur 7: eine schematische Schnittdarstellung durch einen Verflüssiger gemäß einem Ausführungsbeispiel der Erfindung.

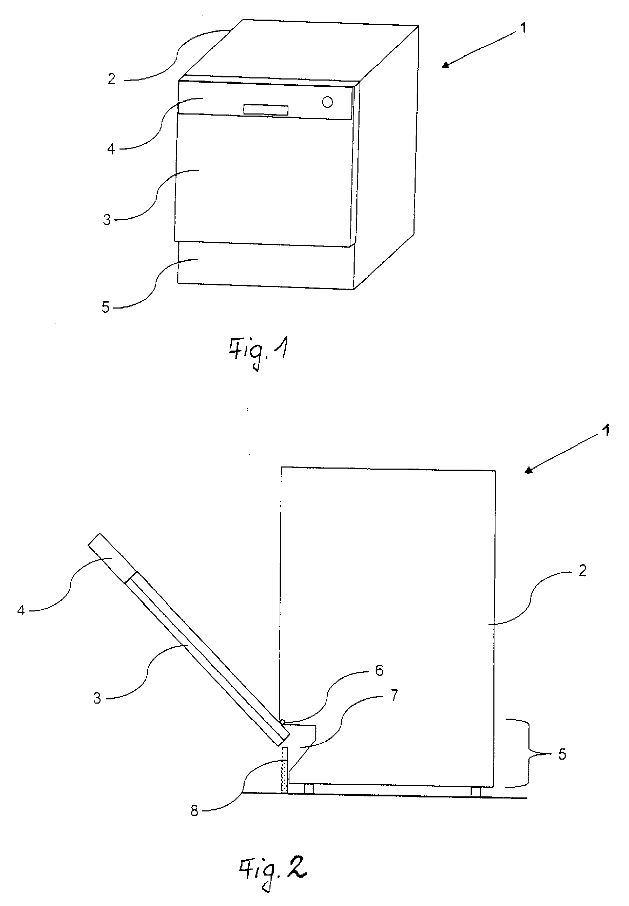

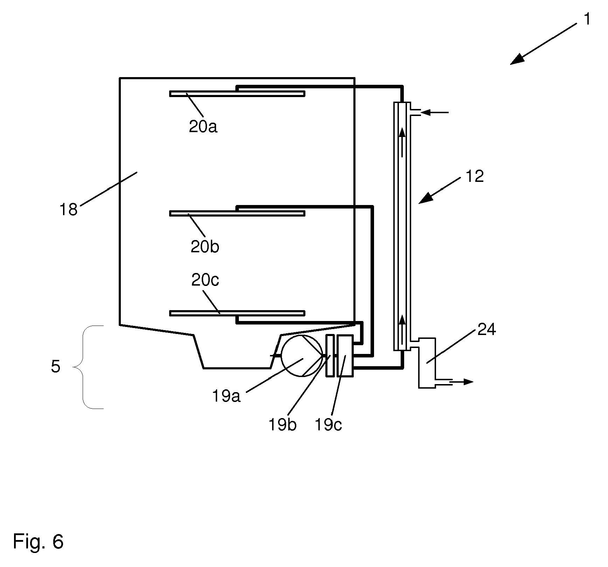

Figur 1 zeigt schematisch eine haushaltsübliche Geschirrspülmaschine 1 in einer Frontansicht von außen. Die Geschirrspülmaschine 1 verfügt über ein Außengehäuse 2, eine Beschickungstür 3, eine Bedienblende 4 sowie einen Sockelbereich 5, welcher die meisten technischen Komponenten wie Sammeltopf, Umwälzpumpe 19a, Laugenpumpe und weitere dem Fachmann bekannte Aggregate enthält. Innerhalb des Außengehäuses 2 befindet sich der Spülraum 18 (in Figur 1 nicht dargestellt). Dieser Spülraum 18 weist mehrere um eine gemeinsame Drehachse verdrehbar gelagerte, in Fig. 6 dargestellte Sprüharme 20a, 20b, 20c zur Beschickung von Spülgut mit Spülflotte auf.

In Figur 2 ist eine Seitenansicht der Geschirrspülmaschine 1 gemäß Figur 1 dargestellt. Zu erkennen ist die Beschickungstür 3, die über einen Drehpunkt 6 in einen Freiraum 7 einschwenkt. Der Freiraum 7 und der Sockelbereich 5 sind durch einen Sockel 8 verkleidet.

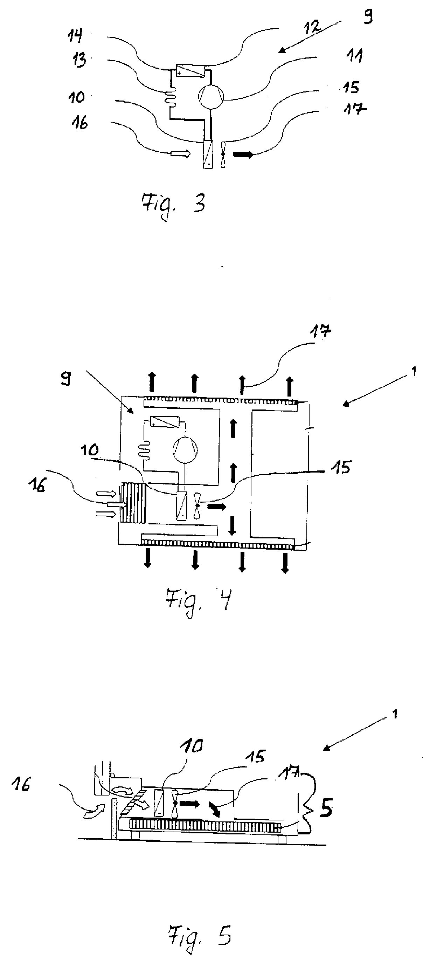

Figur 3 zeigt einen schematischen Aufbau eines Wärmepumpenkreislaufes 9 mit den Komponenten Verdampfer 10, Verdichter 11, Verflüssiger 12, Drosselstelle 13 sowie einen diese Komponenten verbindenden Strömungskreislauf 14. In Strömungsrichtung des Wärmepumpenkreislaufes 9 hinter dem Verdampfer 10 ist ein Ventilator 15 angeordnet. Dieser Ventilator 15 saugt die Zuluft 16 durch den Verdampfer 10 und führt diese abgekühlte Abluft 17 aus dem Wärmepumpenkreislauf 9 ab.

Der Wärmepumpenkreislauf 9 gemäß Figur 3 funktioniert so, dass die vom Ventilator 15 in den Verdampfer gesaugte Zuluft 16 ihre Wärmeenergie an ein in dem Strömungskreislauf 14 geführtes Kältemittel abgibt. Die entzogene Wärmeenergie aus der Zuluft 16 wird auf das Kältemittel übertragen und anschließend mittels des Verdichters 11 komprimiert und somit auf ein höheres Temperaturniveau gebracht. Schließlich kondensiert das heiße Kältemittel an dem Verflüssiger 12 und heizt die Spülflotte, welche innerhalb des Verflüssigers 12 an dem heißen Kältemittel vorbeigeführt wird, auf.

Figur 4 zeigt den Wärmepumpenkreislauf 9 gemäß Figur 3 in seiner Anordnung in dem Außengehäuse 2 der Geschirrspülmaschine 1.

Figur 5 zeigt den Sockelbereich 5 der Geschirrspülmaschine 1 gemäß Figur 4 mit darin angeordnetem Wärmepumpenkreislauf 9 in einer Seitenansicht.

Figur 6 zeigt eine schematische Schnittdarstellung einer Geschirrspülmaschine 1 mit einem Spülraum 18, in welchem ein oberster Sprüharm 20a zur Beschickung von dargestelltem Spülgut mit Spülflotte angeordnet ist. Erkennbar ist weiterhin eine Umwälzpumpe 19a zur Umwälzung der Spülflotte sowie der Verflüssiger 12, welcher vom Sockelbereich 5 der Geschirrspülmaschine 1 bis zu dem oberen Sprüharm, in diesem Beispiel dem obersten Sprüharm 20a ausgebildet ist. Dabei kann die Wärmeübertragung von dem Kältemittel auf die Spülflotte über die gesamte Länge des Verflüssigers 12, welche annähernd der die Höhe des Spülraums 18 entspricht, stattfinden. Diese Länge ist ausreichend, um die Spülflotte optimal zu erhitzen. Weiterhin muss kein zusätzlicher Raum für den Verflüssiger 12 innerhalb des Außengehäuses 2 der Geschirrspülmaschine 1 zur Verfügung gestellt werden, da ohnehin an dieser Stelle ein Freiraum vorgesehen ist. Ohne Beschränkung der Allgemeinheit sind des Weiteren zwei weitere Sprüharme 20b, 20c vorhanden.

Gemäß der Figur 6 erfolgt der Zulauf der Spülflotte zum oberen Sprüharm 20a durch den Verflüssiger 12. Dabei fließt die Spülflotte in der Bildebene gesehen von unten nach oben. Die im Sockelbereich 5 der Geschirrspülmaschine 1 angeordnete Umwälzpumpe 19a sorgt für die Umwälzung der Spülflotte. Das Kältemittel wird im Gegenstrom von oben nach unten geführt.

Eine Wasserweiche 19c verteilt die von der Umwälzpumpe 19a geförderte Spülflotte in die jeweiligen zu den drei Sprüharmen 20a, 20b, 20c führenden Leitungen. Optional kann eine elektrische Heizung 19b vorhanden sein, auf die jedoch vorteilhafterweise aufgrund der erfindungsgemäßen Erwärmung durch den Verflüssiger 12 der Wärmepumpe auch verzichtet werden kann. Der Verflüssiger 12 ist erfindungsgemäß in Strömungsrichtung der Spülflotte zwischen der Wasserweiche 19c und einer Sprüheinrichtung, vorzugsweise wie in Fig. 6 dargestellt dem obersten Sprüharm 20a angeordnet.

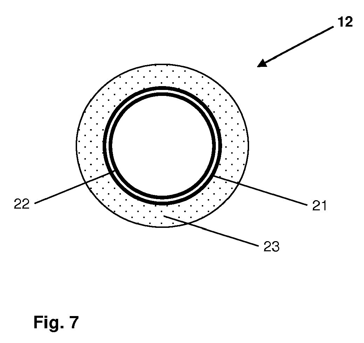

Figur 7 zeigt einen Querschnitt eines Ausführungsbeispiels des Verflüssigers 12. Dieser weist vorzugsweise zwei koaxial zueinander angeordneten Rohre 21, 22 auf, nämlich Spülflottenrohr 22 und Kältemittelrohr 21. Dabei ist das Spülflottenrohr 22 vorzugsweise innerhalb des Kältemittelrohres 21 angeordnet. Eine wärmeisolierende Ummantelung 23, beispielsweise aus Styropor, umgibt das äußere Kältemittelrohr 21, wodurch der Energieverlust nach außen reduziert werden kann.

Durch die erfindungsgemäße Lösung findet keine Erhöhung des Totvolumens innerhalb der Geschirrspülmaschine 1 statt. Jeder Umwälzkreislauf einer Geschirrspülmaschine 1 hat ein gewisses Totvolumen. Damit ist die Summe aller Innenvolumen der Umwälzpumpe 19a, der Zuflussrohre und Sprüharme 20a, 20b, 20c gemeint. Ein solches Totvolumen erhöht den Wasserverbrauch, da es vollständig gefüllt werden muss, bevor Spülflotte für die Benetzung des Geschirrs zur Verfügung steht. Da gemäß der vorliegenden Erfindung kein zusätzlicher Bauraum für den Verflüssiger 12 notwendig ist, bleibt auch das Totvolumen innerhalb der Geschirrspülmaschine 1 gleich. Dies wird dadurch erreicht, dass der Zulauf zu einem oberen, etwa den mittleren von drei Sprüharmen, vorzugsweise aber gemäß der Ausgestaltung in Fig. 6 zum obersten Sprüharm 20a durch den Verflüssiger 12 stattfindet, welcher aus dem Kältemittelrohr 21 und dem koaxial dazu angeordneten Spülflottenrohr 22 besteht. Im Spülflottenrohr 22 fließt die Spülflotte in der Bildebene von unten nach oben, während das Kältemittel durch das Kältemittelrohr 21, welches gemäß der Darstellung in Fig. 7 ein Ringspalt 7 ist, im Gegenstrom von oben nach unten geführt wird. Die Richtungen sind jeweils durch Pfeile in den Zeichnungen dargestellt.

Das Spülflottenrohr 22 hat einen Innendurchmesser von typischerweise 10 bis 17 mm, damit der Druckabfall gering ist und von der Spülflotte mitgeführte Schmutzpartikel das Spülflottenrohr 22 gut passieren können. Das Spülflottenrohr 22 besteht wegen der notwendigen Laugenbeständigkeit vorteilhafterweise aus Edelstahl und besitzt eine Wandstärke von 0,5 bis 1 mm. Das Kältemittelrohr 21 sollte wegen der notwendigen Druckbeständigkeit und Gasdichtheit ebenfalls aus Metall mit einer ähnlichen Wandstärke ausgeführt sein. Der Innendurchmesser des Kältemittelrohres 21 ist so zu wählen, dass der sich zwischen Kältemittelrohr 21 und Spülflottenrohr 22 ergebende Ringspalt 0,5 bis 1 mm beträgt. Dieser enge Ringspalt gewährleistet eine hohe Strömungsgeschwindigkeit des Kältemittels, was wiederum für einen guten Wärmeübergang und einen Abtransport des anfallenden Kondensats in den Kältemittelsammler 24 sorgt. Der enge Ringspalt bewirkt kältemittelseitig ein geringes Innenvolumen des Verflüssigers 12, wodurch dieser leicht durch flüssiges Kältemittel überflutet werden kann, was die wirksame Wärmetauscherfläche in unzulässiger Weise verringern würde. Dies wird in vorteilhafter Weise durch einen unterhalb des Verflüssigers 12 angeordneten Kältemittelsammler 24 verhindert. Aufgrund des in Fig. 6 beschriebenen Gegenstrombetriebs, bei der die Spülflotte im Spülflottenrohr 22 nach oben und das Kältemittel im Kältemittelrohr 21 nach unten fließt, kann sich das Kältemittel bzw. Kältemittelkondensat sich auf einfache Weise in Schwerkraftrichtung im Kältemittelsammler 24 sammeln, ohne die wirksame Wärmetauscherfläche zu verringern. Der Kältemittelsammler 24 verhindert somit das "Überfluten" des Ringspaltes mit flüssigem Kältemittel.

Insgesamt ergibt sich dadurch für den Verflüssiger 12 ein Außendurchmesser von etwa 13 bis 22mm, wodurch er gut in das Außengehäuse 2 der Geschirrspülmaschine 1 integrierbar ist. Da das Spülflottenrohr 22 ein ohnehin in der Geschirrspülmaschine 1 vorhandenes Zulaufrohr zum obersten Sprüharm 20a mit ähnlicher Länge und Durchmesser ist, entsteht kein zusätzliches Totvolumen. Zudem kann das Spülflottenrohr 22 auf einfache Art und Weise, z.B. mittels Schlauchstücken, mit der Umwälzpumpe 19a und mit dem obersten Sprüharm 20a verbunden werden.

Die Erfindung sieht weiterhin Ausgestaltungen vor, bei welchen Kältemittelrohr 21 und Spülflottenrohr 22 keinen runden Querschnitt, sondern beispielsweise einen ovalen Querschnitt aufweisen. Durch derartige Formen kann beispielsweise erreicht werden, dass der Verflüssiger 12 leichter in das Außengehäuse 2 der Geschirrspülmaschine 1 integriert werden kann. Weiterhin kann das Spülflottenrohr 22 eine an seinem Außendurchmesser angeordnete Berippung aufweisen, mittels welcher sich die Oberfläche zur Erhöhung der Wärmetauscherleistung erhöhen kann.

Das erfindungsgemäße Verfahren wird im Folgenden anhand eines Ausführungsbeispiels näher erläutert.

Der Zufluss der Spülflotte zu den Sprüharmen 20a, 20b, 20c wird mittels einer Wasserweiche 19c, zum Beispiel eines Drehschiebers, gesteuert. Dabei kann die Wasserweiche 19c so eingestellt werden, dass entweder nur eine zu einem Sprüharm 20a, 20b, 20c führende Leitung mit Spülflotte beaufschlagt wird oder gleichzeitig mehrere Leitungen.

Der innerhalb der zu einem oberen Sprüharm 20a führenden Leitung angeordnete Verflüssiger 12 des Wärmepumpenkreislaufes 9 ist und bleibt während einer ersten Heizphase, einer nachfolgenden zweiten Heizphase und einer daran anschließenden weiteren ersten Heizphase kontinuierlich in Betrieb. Typischerweise bleibt der Wärmepumpenkreislauf während eines mehrere aufeinanderfolgende erste und zweite Heizphasen umfassenden Teilabschnittes kontinuierlich in Betrieb.

Dabei wird in der ersten Heizphase zuerst die zu dem oberen Sprüharm 20a führende Leitung mit Spülflotte beaufschlagt. Während die Spülflotte mittels der Umwälzpumpe 19a durch den Verflüssiger 12 strömt, wird die Wärmeenergie des Kältemittels auf die Spülflotte übertragen. Dadurch erhitzt sich auch die Spülflotte und gelangt als warmer Strahl mittels des oberen Sprüharms 20a in den Spülraum 18 der Geschirrspülmaschine 1. Sobald das Spülgut mittels des oberen Sprüharms 20a ausreichend mit Spülflotte beaufschlagt wurde, wird die zu dem oberen Sprüharm 20a führende Leitung in Strömungsrichtung vor dem Verflüssiger 12 abgesperrt.

Sodann wird in der zweiten Heizphase bei weiterhin laufendem Wärmepumpenkreislauf 9 die Spülflotte in eine oder mehrere zu je einem anderen Sprüharm 20b, 20c führende Leitungen geführt. Während die Spülflotte durch zumindest einen der anderen Sprüharme 20b, 20c geführt wird, wird zeitgleich die innerhalb der zu dem oberen Sprüharm 20a führenden Leitung verbliebene Teilspülflotte mittels des erhitzten Kältemittels aufgeheizt. Dadurch erhöht sich die Temperatur innerhalb der zu dem oberen Sprüharm 20a führenden Leitung, und damit auch die innerhalb der Spülflotte gespeicherte Energie.

In einer folgenden weiteren ersten Heizphase wird die zu dem oberen Sprüharm 20a führende Leitung anschließend wieder geöffnet, so dass die darin befindliche Spülflottenmenge zu dem oberen Sprüharm 20a strömen kann und die gespeicherte Energie in den Spülraum 18 der Geschirrspülmaschine 1 trägt.

Erste und zweite Heizphasen wechseln sich mehrfach ab. Sobald eine gewünschte Spülflottentemperatur erreicht ist, wird der Wärmepumpenkreislauf 9 abgeschaltet.

Gemäß der Erfindung schließt sich nun die Ausgleichsphase an, während der, zumindest überwiegend, die bisher benachteiligten Wasserwege mit Spülflotte beschickt werden, um eine gleichmäßige Beaufschlagung des Reinigungsgutes mittels aller Sprüharme 20a, 20b, 20c sicherzustellen.

Weiterhin können während der Durchführung der zweiten Heizphase hintereinander insbesondere mehrere andere Sprüharme 20b, 20c von der Spülflotte durchströmt werden.
Außerdem wird die gesamte Abfolge der beiden Heizphasen vor der finalen Ausgleichsphase typischerwies vielfach durchgeführt. Dies führt zu einer besonders intensiven Reinigung des Spülgutes.

Um eine optimale Reinigung des Spülgutes bei möglichst geringem Energieaufwand sicherzustellen, genügt es, dass die Zeitspanne der zweiten Heizphase, in welcher jeweils ein anderer Sprüharm 20b mit Spülflotte beaufschlagt wird, ca. 6 Sekunden bis 12 Sekunden beträgt. In einer so bemessenen Zeitspanne wird die Temperatur der innerhalb des weiterhin in Betrieb befindlichen Verflüssigers 12 angeordneten Teilspülflottenmenge und der Druck im Kältemittelrohr 21 nicht soweit erhöht, dass sich Betriebsparameter einstellen, welche für den sicheren Betrieb des Wärmepumpenkreislaufes 9 unverträglich sind.

Durch das erfindungsgemäße Verfahren wird somit die Lebensdauer des Verflüssigers 12 erheblich erhöht, da der Verflüssiger 12 nicht ständig während des Verfahrens an- und abgeschaltet werden muss. Dadurch erhöht sich wiederum der Wirkungsgrad des Wärmepumpenkreislaufes 9. Auch reduzieren sich durch fehlende Abschaltzeiten die Aufheizzeiten der Spülflotte und damit die gesamte Programmdauer eines Reinigungsprogramms.

### Bezugszeichen

- 1: Geschirrspülmaschine
- 2: Außengehäuse
- 3: Beschickungstür
- 4: Bedienblende
- 5: Sockelbereich
- 6: Drehpunkt
- 7: Freiraum
- 8: Sockel
- 9: Wärmepumpenkreislauf
- 10: Verdampfer
- 11: Verdichter
- 12: Verflüssiger
- 13: Drosselstelle
- 14: Strömungskreislauf
- 15: Ventilator
- 16: Zuluft
- 17: Abluft
- 18: Spülraum
- 19a: Umwälzpumpe
- 19b: Heizeinrichtung
- 19c: Wasserweiche
- 20a,b,c: Sprüharm

## Patentansprüche

1. Verfahren zum Beaufschlagen von innerhalb eines Spülraumes (18) einer Geschirrspülmaschine (1) angeordneten Sprüheinrichtungen (20a, 20b, 20c) mit Spülflotte, wobei die Spülflotte wahlweise in eine oder mehrere zu je mindestens einer Sprüheinrichtung führende Leitung oder Leitungen geleitet wird, wobei ein Programmabschnitt eines Spülprogramms einen ersten Teilabschnitt umfasst, in dem eine Vielzahl von ersten und zweiten Heizphasen abwechselnd durchgeführt werden, wobei während einer ersten Heizphase Spülflotte in eine erste, zu mindestens einer ersten Sprüheinrichtung (20a) führende Leitung geleitet und mittels eines zwischen einer Wasserweiche und der ersten Sprüheinrichtung (20a) angeordneten Verflüssigers (12) eines Wärmepumpenkreislaufes (9) erwärmt wird, wobei während einer zweiten Heizphase, in der die zu der ersten Sprüheinrichtung (20a) führende Leitung geschlossen ist und die innerhalb dieser Leitung stehende Spülflotte mittels des Verflüssigers (12) erwärmt wird, Spülflotte in mindestens eine zweite zu mindestens einer anderen Sprüheinrichtung (20b, 20c) führende Leitung geleitet wird, und wobei der Verflüssiger (12) während des ersten Teilabschnitts kontinuierlich betrieben wird.

2. Verfahren nach Anspruch 1,
**dadurch gekennzeichnet,**
**dass** die erste Sprüheinrichtung (20a, 20b) im Spülraum (18) oberhalb der weiteren Sprüheinrichtung (20b, 20c) angeordnet ist, vorzugsweise die oberste Sprüheinrichtung (20a) im Spülraum (18) darstellt.

3. Verfahren nach Anspruch 1 oder 2,
**dadurch gekennzeichnet,**
**dass** erste und zweite Heizphasen sich mehrfach abwechseln bis eine vorgesehene Programmtemperatur erreicht wird.

4. Verfahren nach einem der vorhergehenden Ansprüche,
**dadurch gekennzeichnet,**
**dass** der Wärmepumpenkreislauf (9) nach Erreichen einer vorgesehenen Programmtemperatur abgeschaltet wird.

5. Verfahren nach dem vorhergehenden Anspruch,
**dadurch gekennzeichnet,**
**dass** nach Abschalten des Wärmepumpenkreislaufs eine Ausgleichsperiode folgt, in der mit einem überwiegenden Anteil, vorzugsweise mit einem Anteil von 80-90%, die mindestens zweite, zur einer anderen Sprüheinrichtung (20b, 20c) führenden Leitung mit Spülflotte beaufschlagt wird,

6. Verfahren nach einem der vorhergehenden Ansprüche,
**dadurch gekennzeichnet,**
**dass** die Dauer einer ersten Heizphase das 5 bis 10-fache der Dauer einer zweiten Heizphase beträgt.

7. Verfahren nach einem der vorhergehenden Ansprüche,
**dadurch gekennzeichnet,**
**dass** eine zweite Heizphase für ca. 6 Sekunden bis 12 Sekunden ausgeführt wird.

## Claims

1. Method for applying washing solution to spray devices (20a, 20b, 20c) arranged inside a rinsing chamber (18) of a dishwasher (1), wherein the washing solution is selectively conducted into one or more line or lines that each lead to at least one spray device, wherein a program portion of a washing program comprises a first partial portion in which a plurality of first and second heating phases are alternately carried out, wherein, during a first heating phase, washing solution is conducted into a first line that leads to at least one first spray device (20a) and heated by means of a condenser (12) of a heat pump circuit (9) arranged between a water deflector and the first spray device (20a), wherein, during a second heating phase in which the line leading to the first spray device (20a) is closed and the washing solution standing in this line is heated by means of the condenser (12), washing solution is conducted into at least one second line leading to at least one other spray device (20b, 20c), and wherein the condenser (12) is continuously operated during the first partial portion.

2. Method according to claim 1,
**characterised in that**
the first spray device (20a, 20b) is arranged in the rinsing chamber (18) above the further spray device (20b, 20c), and is preferably the uppermost spray device (20a) in the rinsing chamber (18).

3. Method according to either claim 1 or claim 2,
**characterised in that**
the first and second heating phases alternate several times until an intended program temperature is reached.

4. Method according to any of the preceding claims,
**characterised in that**
the heat pump circuit (9) is switched off after an intended program temperature has been reached.

5. Method according to the preceding claim,
**characterised in that**
a compensation period follows after the heat pump circuit has been switched off, during which period washing solution is applied to the at least second line leading to another spray device (20b, 20c) in a predominant fraction, preferably a fraction of 80-90 %.

6. Method according to any of the preceding claims,
**characterised in that**
the duration of a first heating phase is from 5 to 10 times the duration of a second heating phase.

7. Method according to any of the preceding claims,
**characterised in that**
a second heating phase is carried out for between approximately 6 seconds and 12 seconds.

## Revendications

1. Procédé d'alimentation, avec un bain de lavage, de dispositifs d'aspersion (20a, 20b, 20c) disposés à l'intérieur d'un espace de lavage (18) d'un lave-vaisselle (1), dans lequel le bain de lavage est conduit au choix dans une ou plusieurs conduite ou conduites respectivement à au moins un dispositif d'aspersion, dans lequel un segment de programme d'un programme de lavage comprend un premier segment partiel dans lequel une multiplicité de premières et deuxièmes phases de chauffe sont exécutées de façon alternée, dans lequel, pendant une première phase de chauffe, le bain de lavage est conduit dans une première conduite conduisant à au moins un premier dispositif d'aspersion (20a) et réchauffé au moyen d'un condenseur (12) d'un circuit de pompe à chaleur (9) disposé entre un distributeur d'eau et le premier dispositif d'aspersion (20a), dans lequel, pendant une deuxième phase de chauffe dans laquelle la conduite conduisant au premier dispositif d'aspersion (20a) est fermée et le bain de lavage situé à l'intérieur de cette conduite est réchauffé au moyen du condenseur (12), le bain de lavage est conduit dans au moins une deuxième conduite conduisant à au moins un autre dispositif d'aspersion (20b, 20c), et le condenseur (12) est mis en fonctionnement de façon continue pendant le premier segment partiel.

2. Procédé selon la revendication 1,
**caractérisé en ce que**
le premier dispositif d'aspersion (20a, 20b) est disposé dans l'espace de lavage (18) au-dessus de l'autre dispositif d'aspersion (20b, 20c), constitue de préférence le dispositif d'aspersion (20a) le plus haut dans l'espace de lavage (18).

3. Procédé selon la revendication 1 ou 2,
**caractérisé en ce que**
des premières et deuxièmes phases de chauffe alternent plusieurs fois jusqu'à ce qu'une température de programme prévue soit atteinte.

4. Procédé selon l'une des revendications précédentes,
**caractérisé en ce que**
le circuit de pompe à chaleur (9) est mis hors circuit après l'obtention d'une température de programme prévue.

5. Procédé selon la revendication précédente,
**caractérisé en ce que**,
après la mise hors circuit du circuit de pompe à chaleur, il s'ensuit une période d'équilibrage pendant laquelle la au moins deuxième conduite conduisant à un autre dispositif d'aspersion (20b, 20c) est alimentée en bain de lavage avec une fraction prédominante, de préférence avec une fraction de 80-90%.

6. Procédé selon l'une des revendications précédentes,
**caractérisé en ce que**
la durée d'une première phase de chauffe est égale à 5 à 10 fois la durée d'une deuxième phase de chauffe.

7. Procédé selon l'une des revendications précédentes,
**caractérisé en ce**
**qu'**une deuxième phase de chauffe est effectuée pendant environ 6 secondes à 12 secondes.
